# EUROPEAN PATENT APPLICATION

(11) **EP 3 016 367 A1**
(43) Date of publication of application: **04.05.2016**
(21) Application number: 15189836.8
(22) Date of filing: 14.10.2015
(51) Int. Cl.: H04N 1/40

(54) **METHOD AND APPARATUS FOR HANDLING A DEFECT OBJECT IN AN IMAGE**

(30) Priority: 27.10.2014 EP 14306708
(71) Applicant: Thomson Licensing, 92130 Issy-les-Moulineaux (FR)
(72) Inventor: Theis, Oliver, 32689 Kalletal (DE); Ostermann, Ralf, 30657 Hannover (DE)
(74) Representative: Schmidt-Uhlig, Thomas

(57) **Abstract**

A method and an apparatus (30) for handling a defect object in an image are described. A light field information retrieving unit (34) retrieves (20) a light field capture of the image. A view generator (35) generates (21) a center view (CV) and two or more side views (SVₙ) from the light field capture. A defect determining unit (36) then determines (22) a defect object in the image through a comparison of the center view (CV) and the two or more side views (SVₙ).

## Description

### FIELD OF THE INVENTION

The invention relates to a method and an apparatus for handling a defect object in an image. In particular, the invention relates to a method and an apparatus for handling scratch and dirt objects in scanned film.

### BACKGROUND OF THE INVENTION

Although motion picture distribution on film is declining, there still are large archives of analog films that need to be transferred into the digital domain. Furthermore, long-term archiving of valuable assets is still done on film. For the future, technologies exist for preserving digital data on film as well.

Today, technical solutions for transferring image information from the analog to the digital domain are available not only for the professional motion picture film industry, but also for the semi-professional and amateur market. These solutions are typically based on film scanning.

There are a number of issues that impact image quality when scanning analog film, such as the presence of scratches and dust. One solution to counteract scratches and dirt is infrared cleaning. It requires an additional IR scan of the film and makes use of the fact that most color films are transparent to infrared light, whereas dust and scratches are not. In cases where the film is opaque to infrared light, like metallic silver black and white films or color films with cyan layers, dark-field illumination may be used for detecting scratches and dirt. Both approaches require a second light source and an additional scan with a much longer exposure time. From an IR or dark-field scan a defect matte is generated, which describes image regions requiring digital restoration.

As an alternative, wet gate scanning inherently removes dirt and repairs scratches using a chemical cleaning solvent having a refractive index close to that of the film. A major drawback, however, is the cost of handling the toxic chemicals that are involved in the process.

### SUMMARY OF THE INVENTION

It is an object of the present invention to propose a solution for handling defect objects in an image without an additional light source or extra exposure.

According to the invention, a method for handling a defect object in an image comprises:
- retrieving a light field capture of the image;
- generating a center view and two or more side views from the light field capture; and
- determining a defect object in the image through a comparison of the center view and the two or more side views.

Accordingly, a computer readable storage medium has stored therein instructions enabling handling a defect object in an image, which, when executed by a computer, cause the computer to:
- retrieve a light field capture of the image;
- generate a center view and two or more side views from the light field capture; and
- determine a defect object in the image through a comparison of the center view and the two or more side views.

Also, in one embodiment an apparatus configured to handle a defect object in an image comprises:
- a light field information retrieving unit configured to retrieve a light field capture of the image;
- a view generator configured to generate a center view and two or more side views from the light field capture; and
- a defect determining unit configured to determine a defect object in the image through a comparison of the center view and the two or more side views.

In another embodiment, an apparatus configured to handle a defect object in an image comprises a processing device and a memory device having stored therein instructions, which, when executed by the processing device, cause the apparatus to:
- retrieve a light field capture of the image;
- generate a center view and two or more side views from the light field capture; and
- determine a defect object in the image through a comparison of the center view and the two or more side views.

An idea of the invention is to use a 4D plenoptic camera instead of a conventional 2D camera for scanning analog motion or still picture film. Since such a camera is able to distinguish among light rays arriving from different directions, it is suitable for detecting small scratch and dirt objects using different views. In contrast to the known methods described above, no additional illumination or extra exposures are required. The light field capture of the image is either retrieved directly from the camera or is an already available light field capture retrieved from a storage unit.

In one embodiment, for the comparison of the center view and the two or more side views, the two or more side views are projected onto the center view using a homographic transformation determined during a calibration procedure. The geometric relations among different views are fixed for each pixel. Since the properties of the lens system and the distance between the film and the sensor are known, the geometry can be retrieved through calibration. The calibration allows computing a transformation for projecting the different views onto a reference image plane. A center image is then estimated by combining the projected two or more side views, and the estimated center image is compared with the center view by calculating a suitable distance metric.

In one embodiment, the distance metric is one of the sum of absolute differences, the sum of squared differences, and the peak signal-to-noise ratio. These distance metrics can easily be determined for each pixel. A pixel is marked as belonging to a defect object if the absolute value of the corresponding difference is above a certain threshold.

In one embodiment, the projected two or more side views are combined using a pixel-wise median. This effectively removes scratches and dirt objects at different locations but preserves the image content. Of course, instead of the median any other method for robust outlier removal can be used.

In one embodiment, the comparison of the center view and the two or more side views is performed individually for different color channels of the light field capture. Depending on the type and the properties of the defect object, not all color channels are affected in the same way by the defect object. Analyzing the different color channels individually thus allows determining further information about the defect object. Advantageously, the defect object is identified in a defect matte. In this way the defect information can be made available to further processing stages.

In one embodiment, a corrected center view is generated by replacing pixels of the determined defect object with pixels of the estimated center image. The image information conveyed by the light field capture allows removing scratches and dirt objects from the film scan without loss of information by reconstructing missing information from different views.

### BRIEF DESCRIPTION OF THE DRAWINGS

- Fig. 1: shows a principle layout of a film scanning device;
- Fig. 2: illustrates imaging of an object in a focal plane into a sensor plane with a standard camera;
- Fig. 3: depicts the situation of Fig. 2, but with a small object before the focal plane;
- Fig. 4: shows the locations of a dirt object and a scratch in a center view and eight side views;
- Fig. 5: depicts an exemplary defect matte for the center view of Fig. 4;
- Fig. 6: shows the center view of Fig. 4 after correction using an estimate derived from the side views;
- Fig. 7: illustrates how a dust particle affects the color channels of a scanned film;
- Fig. 8: illustrates how a scratch affects the color channels of a scanned film;
- Fig. 9: schematically illustrates a method according to an embodiment of the invention for handling a defect object in an image;
- Fig. 10: schematically depicts a first embodiment of an apparatus configured to perform a method according to the invention; and
- Fig. 11: schematically illustrates a second embodiment of an apparatus configured to perform a method according to the invention.

### DETAILED DESCRIPTION OF PREFERRED EMBODIMENTS

For a better understanding the invention shall now be explained in more detail in the following description with reference to the figures. It is understood that the invention is not limited to these exemplary embodiments and that specified features can also expediently be combined and/or modified without departing from the scope of the present invention as defined in the appended claims.

In the following reference is made to an application of the invention to film scanning. However, the invention is likewise applicable to other fields, e.g. plenoptic microscopy, object detection for microfiches, and object detection problems in the field of plenoptic still picture imaging.

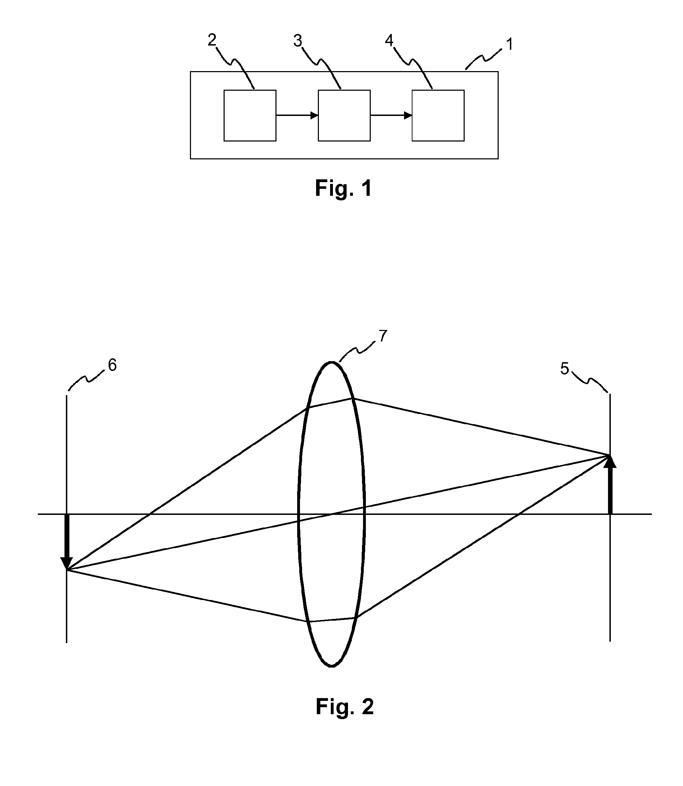

Fig. 1 shows a principle layout of a film scanning device 1 for transferring analog images into the digital domain. The device 1 can be divided into three major parts, namely a light source 2, either monochromatic or white, the object 3 to be scanned, i.e. the film, and a light capturing device 4, i.e. a camera with a lens and a digital sensor, either gray or color. State of the art film scanners use conventional 2D cameras focused on the surface of the film. This situation is depicted in Fig. 2. The light intensity at the focal plane 5 is mapped to the corresponding photosensitive element on the sensor plane 6 by integrating all light beams from a certain position hitting the lens 7 in every direction.

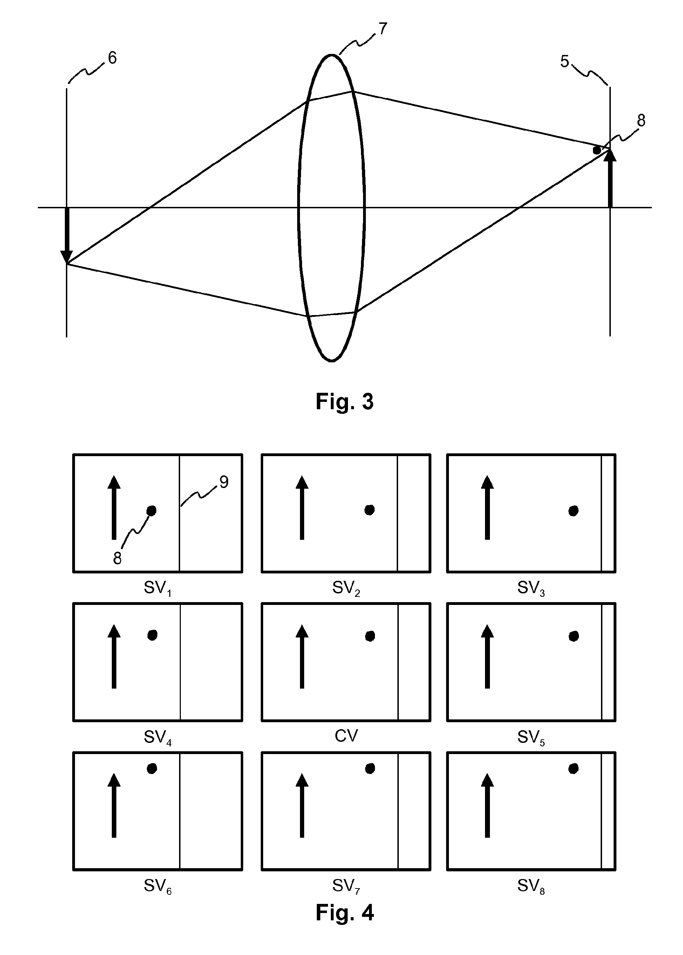

As can be seen from Fig. 3, a small object 8 on the surface of the film, like a scratch or a dirt particle, prevents a number of light rays from hitting the lens 7. However, certain angular rays carrying information from below the object 8 still impinge on the lens 7. Therefore, the small object 8 does not appear 100% opaque on the image.

In contrast to a standard camera, a 4D plenoptic or light field camera not only sees the intensity of light at a certain position, but also the direction of a light ray. This is achieved by observing an object through a single lens from multiple points of view in a single shot. As a result, only a subset of the rays entering the lens is captured within each view.

State-of-the-art implementations of plenoptic cameras use arrays of micro-lenses between the main lens and the sensor for separating the rays, which makes them behave as an array of either Galilean or Keplerian telescopes. Alternatively, an array of individual camera lens systems can be used instead of the arrays of micro-lenses.

Since a plenoptic camera is able to distinguish between straight and angular rays, it is suitable for detecting small scratch and dirt objects when scanning films. In the following it is assumed that the light-field sensor image has been demultiplexed into a single center view and multiple side views from different angles. An object in the focal plane renders on every view, but small scratches and dirt objects appear differently in the center view compared to the side views. As dirt objects are located on the film substrate, they appear at different positions in each of the views. Also, small scratches either appear at different positions or their diffraction pattern is different in each view. Fig. 4 shows the locations of a dirt object 8 and a scratch 9 in a center view CV and eight side views SVₙ.

The above described situation is exploited for detecting defects on scanned films. A plenoptic camera is used for scanning images of a film. The resulting 4D light field information is utilized for detecting scratches and dirt objects. The approach relies on the fact that the geometric relations among the different views are fixed for each pixel, since the properties of the lens system and the distance between the film and the sensor are known. The geometry can, therefore, be retrieved through calibration, which allows computing a transformation for projecting the different views onto a reference image plane.

For example, the following calibration procedure is used. First, a known target image is scanned, for example a black and white checkerboard or another suitable camera calibration pattern. Then camera parameters are determined for each of the demultiplexed views from the calibration pattern scan. This can be done, for example, with a common multi-view camera and lens calibration tool. Finally, the center view is defined as reference image plane and the homographic transformations for each of the side views to the center view are determined from the camera parameters.

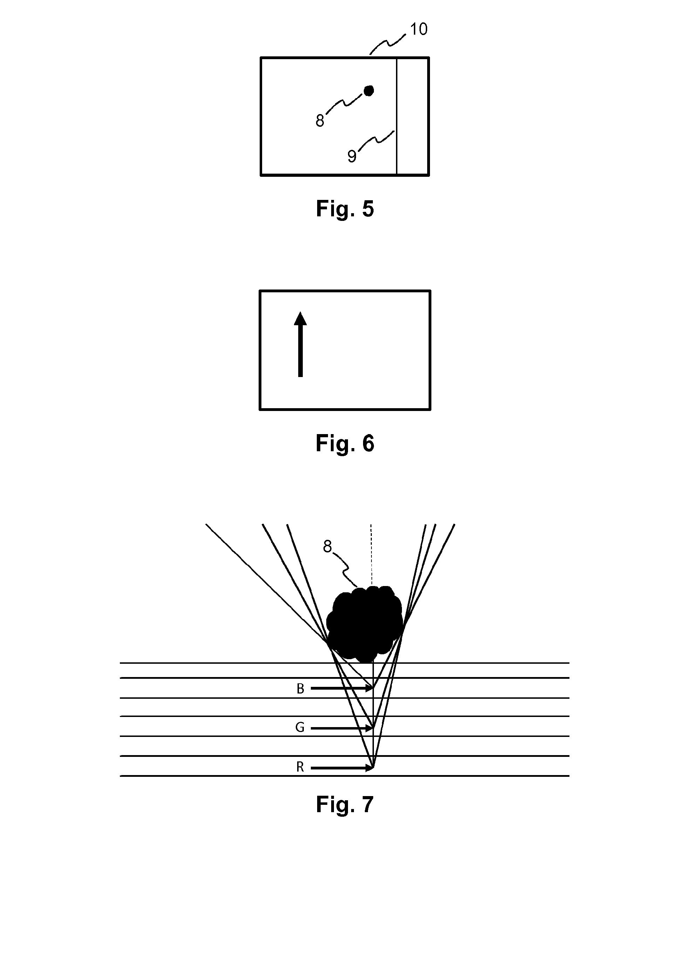

A defect matte is commonly used to identify scratches or dirt for each scanned frame. An exemplary defect matte 10 for the center view CV of Fig. 4 is depicted in Fig. 5. Both the dirt object 8 and the scratch 9 have been marked as defects. Once the 4D light field information and the demultiplexed center view and the multiple side views are available, the defect matte is computed, for example, as follows. First, the side views are projected onto the center view using the homographic transformation determined during calibration. Then the center image is estimated by suitably combining the side view images for each pixel. In one embodiment, the pixel-wise median of all side views is used for this purpose. This effectively removes scratches and dirt objects at different locations but still preserves image content. Instead of the median any other method for robust outlier removal can be used. As the color layers in a film are stacked upon each other, it is beneficial to perform this operation separately and individually for each color channel. The estimation obtained from the collection of side views is then compared with the center view by calculating a suitable distance metric. Typically, this is done by aggregating pixel-wise differences between the two. Examples are the sum of absolute differences, the sum of squared differences, peak signal-to-noise ratio, etc. Also different color spaces can be employed for determining the distance. A pixel is marked in the defect matte if the absolute value of the corresponding difference is above a certain threshold.

Small defects may be removed by using side view information. For this purpose each pixel of the center view that is marked in the defect matte is replaced with the estimate derived from the side views. The center view CV of Fig. 4 after correction is depicted in Fig. 6. Large objects may not be corrected in this way due to missing side view information.

As indicated before, dirt or dust is located on top of the film surface, as shown in Fig. 7, and appears for only a single frame. Depending on the size of the object, the detection, as described above, may be independently carried out on each color channel. Smaller particles are likely to be detected on the blue channel B, while larger particles are more likely to appear on the green channel G or the red channel R. Removal of such defects using the estimate derived from the side views is preferably carried out simultaneously on all channels.

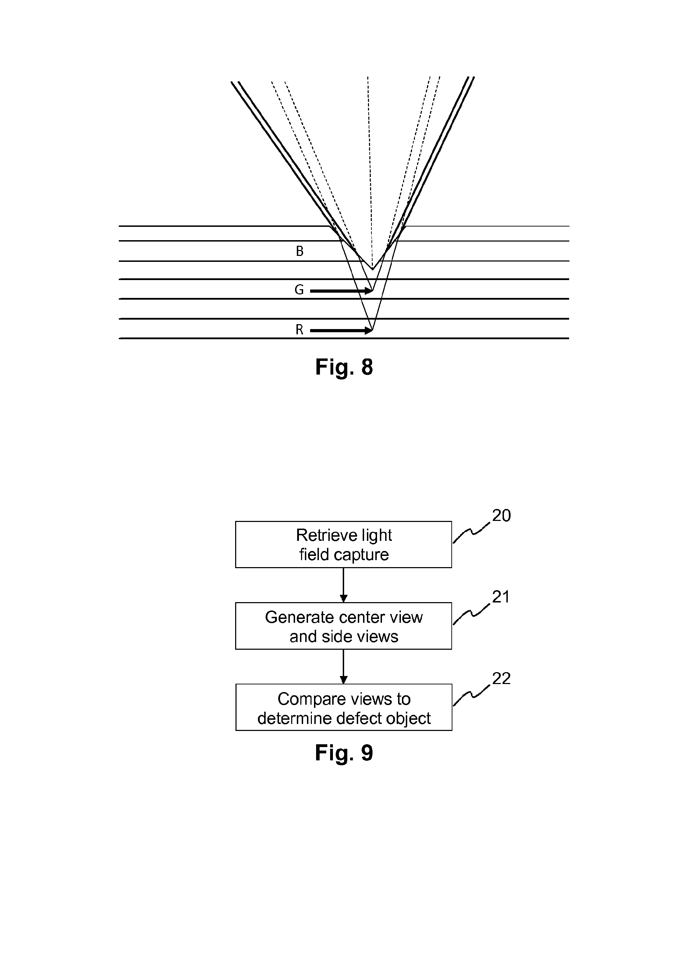

Vertical scratches result from small particles continuously damaging the surface of the film during film transportation in the projector or scanner. They usually appear over multiple frames and their positions tend to wander a bit from frame to frame. Fig. 8 shows the profile of a scratch on the surface of a color film. Light gets diffracted in a way that it diverges from the center. Depending on the depth of the scratch profile, different color layers are damaged, starting with blue, then blue plus green, and finally blue plus green plus red. It is, therefore, advantageous to start computing the defect matte using only the red channel. After that the green and the blue channels may be processed if detection was positive. Removal of such defects using the estimate derived from the side views is preferably only applied to those channels with positive detection.

Fig. 9 schematically illustrates one embodiment of a method for handling a defect object in an image. In a first step a light field capture of the image is retrieved 20, e.g. by capturing the light filed image with a plenoptic camera or by accessing an available light filed image in a storage unit. Then a center view CV and two or more side views SVₙ are generated 21 from the light field capture. Finally, a defect object in the image is determined 22 through a comparison of the center view CV and the two or more side views SVₙ.

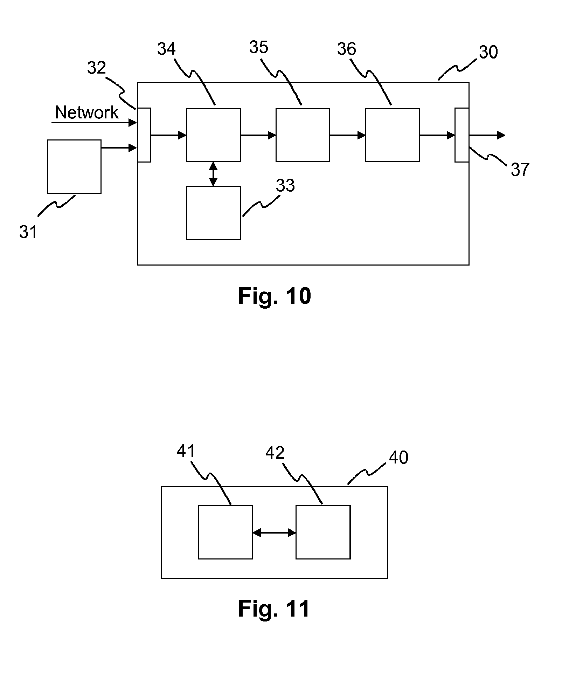

One embodiment of an apparatus 30 configured to perform the method according to the invention is schematically depicted in Fig. 10. The apparatus 30 has a light field information retrieving unit 34 for retrieving 20 a light field capture of the image, e.g. directly from a plenoptic camera 31 via an input 32. Alternatively, an already available light field capture is retrieved from a local storage 33 or from a network via the input 32. A view generator 35 generates 21 a center view CV and two or more side views SVₙ from the light field capture. A defect determining unit 36 then determines 22 a defect object in the image through a comparison of the center view CV and the two or more side views SVₙ. A resulting defect matte or a corrected image are preferably made available via an output 37. The output 37 may also be combined with the input 32 into a single bidirectional interface. Of course, the different units 34, 35, 36 may likewise be fully or partially combined into a single unit or implemented as software running on a processor.

Another embodiment of an apparatus 40 configured to perform the method according to the invention is schematically illustrated in Fig. 11. The apparatus 40 comprises a processing device 41 and a memory device 42 storing instructions that, when executed, cause the apparatus to perform steps according to one of the described methods.

For example, the processing device 41 can be a processor adapted to perform the steps according to one of the described methods. In an embodiment said adaptation comprises that the processor is configured, e.g. programmed, to perform steps according to one of the described methods.

## Claims

1. A method for handling a defect object in an image, the method **comprising**:
- retrieving (20) a light field capture of the image;
- generating (21) a center view (CV) and two or more side views (SVₙ) from the light field capture; and
- determining (22) a defect object in the image through a comparison of the center view (CV) and the two or more side views (SVₙ).

2. The method according to claim 1, **wherein** the light field capture of the image is retrieved (20) from a camera (31) or from a storage unit (33).

3. The method according to claim 1 or 2, **wherein** for the comparison of the center view (CV) and the two or more side views (SVₙ) the two or more side views (SVₙ) are projected onto the center view (CV) using a homographic transformation determined during a calibration procedure.

4. The method according to claim 3, **further** comprising estimating a center image by combining the projected two or more side views (SVₙ), and comparing the estimated center image with the center view (CV) by calculating a suitable distance metric.

5. The method according to claim 4, **wherein** the distance metric is one of the sum of absolute differences, the sum of squared differences, and the peak signal-to-noise ratio.

6. The method according to claim 4 or 5, **wherein** the projected two or more side views (SVₙ) are combined using a pixel-wise median.

7. The method according to one of claims 4 to 6, **further** comprising generating a corrected center view (CV) by replacing pixels of the determined defect object with pixels of the estimated center image.

8. The method according to one of the preceding claims, **wherein** the comparison of the center view (CV) and the two or more side views (SVₙ) is performed individually for different color channels of the light field capture.

9. The method according to one of the preceding claims, **further** comprising identifying the defect object in a defect matte.

10. A computer readable storage medium having stored therein instructions enabling handling a defect object in an image, which, when executed by a computer, cause the computer to:
- retrieve (20) a light field capture of the image;
- generate (21) a center view (CV) and two or more side views (SVₙ) from the light field capture; and
- determine (22) a defect object in the image through a comparison of the center view (CV) and the two or more side views (SVₙ).

11. An apparatus (30) configured to handle a defect object in an image, the apparatus (30) **comprising**:
- a light field information retrieving unit (34) configured to retrieve (20) a light field capture of the image;
- a view generator (35) configured to generate (21) a center view (CV) and two or more side views (SVₙ) from the light field capture; and
- a defect determining unit (36) configured to determine (22) a defect object in the image through a comparison of the center view (CV) and the two or more side views (SVₙ).

12. An apparatus (40) configured to handle a defect object in an image, the apparatus (40) comprising a processing device (41) and a memory device (42) having stored therein instructions, which, when executed by the processing device (41), cause the apparatus (40) to:
- retrieve (20) a light field capture of the image;
- generate (21) a center view (CV) and two or more side views (SVₙ) from the light field capture; and
- determine (22) a defect object in the image through a comparison of the center view (CV) and the two or more side views (SVₙ).
